# EUROPÄISCHE PATENTSCHRIFT

(11) **EP 3 708 261 B1**
(45) Veröffentlichungstag und Bekanntmachung des Hinweises auf die Patenterteilung: **14.05.2025**
(21) Anmeldenummer: 19162002.0
(22) Anmeldetag: 11.03.2019
(51) Int. Cl.: B05C 11/10, B29B 13/02

(54) **ABGABEEINHEIT ZUM AUSGEBEN VON KLEBSTOFF**
DISPENSING UNIT FOR DISPENSING ADHESIVE
UNITÉ DE DISTRIBUTION PERMETTANT LA DISTRIBUTION DE L'ADHÉSIF

(43) Veröffentlichungstag der Anmeldung: 16.09.2020
(73) Patentinhaber: Robatech AG, 5630 Muri (CH)
(72) Erfinder: Mösli, Urs, 8405 Winterthur (CH); Käppeli, Christoph, 5634 Merenschwand (CH); Meier, Martin, 5627 Besenbüren (CH)
(74) Vertreter: Franke, Markus

(56) Entgegenhaltungen:
- DE-U1- 202006 014 586
- ES-A1- 2 325 610
- ANONYMOUS: "Anleitung -Teile", 1 January 2017 (2017-01-01), Minneapolis, pages 16 - 16, XP055623137, Retrieved from the Internet <URL:https://www.graco.com/content/dam/graco/tech_documents/manuals/333/333347/334950DE-M.pdf> [retrieved on 20190917]

## Beschreibung

Die Erfindung betrifft eine Abgabeeinheit zum Ausgeben von Klebstoff gemäß dem Oberbegriff des Anspruchs 1.

Bei der an den Verteiler anschließbaren Leitung, in die der geschmolzene Klebstoff vom Verteiler ausgebbar ist, handelt es sich insbesondere um einen Heizschlauch, somit beheizbaren Schlauch, sodass der aus dem Verteiler ausgegebene geschmolzene Klebstoff während des Förderns durch die Leitung bzw. den Heizschlauch zu einem Klebstoffauftraggerät nicht abkühlt.

Abgabeeinheiten zum Ausgeben von Klebstoff sind in aller Regel so ausgebildet, dass eine Begrenzungsfläche zum Anschließen der Leitung parallel zu einer der beiden Hauptachsen der Abgabeeinheit positioniert ist. Somit hängt die Abgangsrichtung der Leitung weitgehend von der Ausrichtung des Grundrisses der Abgabeeinheit ab. Leitungen führen beispielsweise in der Verlängerung der Abgabeeinheit von dieser weg, somit insbesondere nach hinten, oder aber quer zur Längsachse, somit seitlich. Allerdings ist der Einbau einer derartigen Abgabeeinheit in eine Hauptfunktionseinheit, beispielsweise eine Verpackungsmaschine, hierdurch eingeschränkt bzw. bereits vorbestimmt. Es kann durchaus erforderlich sein, eine Abgabeeinheit um 90° zu drehen, um zu erreichen, dass eine Leitung, die normalerweise nach hinten weggeführt wird, nunmehr zur Seite, bezogen auf die Verpackungsmaschine, weggeführt werden kann. Ohne Drehen der gesamten Abgabeeinheit kann die Leitung nicht sinnvoll in diese neue Richtung weggeführt werden. Die Leitung müsste dann, wenn die Abgabeeinheit nicht um 90° gedreht werden soll, mittels einer 90°-Verschraubung angeschlossen werden. Dies ist für den Klebstofffluss äußerst nachteilig.

Eine Abgabeeinheit, die die Merkmale des Oberbegriffs des Patentanspruchs 1 aufweist, ist aus der EP 1 439 916 A1 bekannt. Dort ist eine Abgabeeinheit zur Abgabe von Klebstoff beschrieben. Die Abgabeeinheit weist ein Gehäuse mit Vorderseite, Rückseite, linken und rechten Seitenteilen, einen Verteiler mit einem Einlass in Fluid-Kommunikation mit einer Quelle von Klebstoff und einer Mehrzahl von Auslässen, die jeweils für den Anschluss eines Schlauchs geeignet sind, und eine Pumpe zum Fördern des Klebstoffs durch den Verteiler auf. Hierbei ist der Verteiler zentral zwischen dem linken und rechten Seitenteil des Gehäuses positioniert, sodass die Mehrzahl der Auslässe im Wesentlichen äquidistant zu dem linken und rechten Seitenteil ist. Nachteilig ist bei dieser Anordnung, dass zum Anschließen der Heizschläuche an den Heizverteiler stets um 90° abgewinkelte Anschlüsse verwendet werden müssen. Normalerweise sind bei 90°-Anschlüssen relativ lange Bereiche vorhanden, die nicht beheizt und nicht isoliert sind. Somit fällt im Betrieb die Klebstofftemperatur im Bereich der Umlenkungen deutlich ab. Beim Aufheizen entsteht der große Nachteil, dass der Klebstoff bei diesen nicht beheizten Umlenkungen ganz am Schluss flüssig wird. Es können ungünstige und zerstörerische Druckspitzen beim Aufheizen entstehen und die Aufheizzeit kann deutlich verlängert werden, und somit den Anwender in seiner Produktivität behindern.

In der ES 2 325 610 A1 ist eine Abgabeeinheit zur Abgabe von Klebstoff beschrieben, die ein Gehäuse mit Vorderseite, Rückseite, linken und rechten Seitenteilen aufweist, ferner einen Verteiler mit einem Einlass in Fluid-Kommunikation mit einer Quelle von Klebstoff und einer Mehrzahl von Auslässen, die jeweils für den Anschluss eines Schlauchs geeignet sind, ferner eine Pumpe für das Fördern das Klebstoffs durch den Verteiler. Diese Abgabeeinheit lässt sich für zwei Abgangsrichtungen der Schläuche einsetzen. Allerdings muss beim Wechsel der Abgangsrichtung die Abgabeeinheit umgebaut werden, von der Abgangsrichtung nach hinten auf die Abgangsrichtung zur Seite bzw. von der Abgangsrichtung zur Seite auf die Abgangsrichtung nach hinten.

In "Originalbetriebsanleitung Schmelzgerät Concept C, Ausgabe 2.1", Gesamtdokumentation Art. Nr. 156392, Originalbetriebsanleitung Art. Nr. 156394, Ausgabedatum Februar 2018, der Robatech AG, Pilatusring 10, 5630 Muri, Schweiz ist ein Schmelzgerät gezeigt, mit einer hinteren Rückseite, in deren Bereich ein Verteiler zum Ausgeben von geschmolzenem Klebstoff in maximal zwei an den Verteiler anschließbare Leitungen angeordnet ist. Hierbei weist der Verteiler zwei ebene Begrenzungsflächen auf. Die eine Begrenzungsfläche ist senkrecht zu einer Aufstandsebene des Schmelzgeräts auf einem Boden angeordnet und fluchtet mit einer Rückwand des Schmelzgeräts, während die andere Begrenzungsfläche an die erstgenannten Begrenzungsfläche oben angrenzt und von dieser nach vorne geneigt angeordnet ist, wobei die Begrenzungsflächen einen Winkel von 135° einschließen. Die jeweiligen Anschlüsse des Verteilers ermöglichen im Bereich der Begrenzungsflächen ein Anschließen von Leitungen unter unterschiedlichen Winkeln zwecks optimaler Anpassung bei der Montage.

Aus "Anleitung-Teile InvisiPac HM25c Heißschmelz-Zufuhrsystem" der GRACO INC. MINNEAPOLIS MN 55440-1441, US, Ausgabe C, November 2017, 3A5395C DE ist ein Schmelzgerät zum Ausgeben von geschmolzenem Klebstoff bekannt. Das Schmelzgerät weist im Bereich einer Seitenwand einen senkrecht stehenden Verteiler zum Anschließen von Leitungen auf, wobei dieser Verteiler drei senkrecht stehende Begrenzungsflächen aufweist, wobei die beiden äußeren Begrenzungsflächen einen stumpfen Winkel mit der mittleren Begrenzungsfläche einschließen. Der Verteiler ist in Abstand zu einem Eckbereich des Schmelzgeräts zwischen dessen Rückseite und einer an diese angrenzenden Seitenfläche angeordnet, wobei die mittlere Begrenzungsfläche parallel zu der Seitenfläche angeordnet ist. Jede Begrenzungsfläche weist zwei Anschlüsse auf, zum Anschließen von Leitungen bzw. Heizschläuchen.

Aus "Anleitung-Teile InvisiPac HM25 und HM50 Tank-Free Heißschmelz-Zufuhrsystem" der genannten Firma GRACO, 334950M DE, Ausgabe M, Januar 2017, ist ein weiteres Schmelzgerät zum Ausgeben von geschmolzenem Klebstoff bekannt. Die Außenkontur dieses Schmelzgeräts weist eine Vielzahl unter stumpfen Winkeln zueinander angeordnete Wandabschnitte auf. Im Bereich eines hinteren Wandabschnitts ist das Schmelzgerät mit einem senkrecht stehenden Verteiler zum Anschließen von Leitungen versehen. Dieser Verteiler weist drei senkrecht stehende Begrenzungsflächen auf, wobei die beiden äußeren der Begrenzungsfläche jeweils einen stumpfen Winkel mit der mittleren Begrenzungsfläche einschließen. Der Verteiler ist in einem zentralen Bereich des hinteren Wandabschnitts angeordnet. Jede Begrenzungsfläche weist mehrere Anschlüsse auf, zum Anschließen der Leitungen.

Bei bekannten Anordnungen von Abgabeeinheiten bzw. Schmelzgeräten und Abgängen zu Leitungen bzw. Heizschläuchen ist es erforderlich, 90°-Verschraubungen zwischen dem Verteiler und den Leitungen bzw. Heizschläuchen zu verwenden. Die hieraus resultierenden Nachteile sind vorstehend erörtert worden.

Bei einigen bekannten Abgabeeinheiten muss entweder die Abgabeeinheit abhängig von der Abgangsrichtung der Leitung konfiguriert und so gestellt werden oder es muss die Abgabeeinheit entsprechend umgebaut werden. Dies stellt einen erhöhten Aufwand bei der Planung und Bestellung von Abgabeeinheiten dar.

Aus Kostengründen ist bei vielen Abgabeeinheiten entweder die Anzahl der möglichen Leitungsabgänge begrenzt oder es sind die Platzverhältnisse zum Anschließen der Leitungen sehr eng. Oft ist es dann schwierig, die Leitungen anzuschließen und die Befestigungen mit dem korrekten Drehmoment anzuziehen. Dies wird zusätzlich erschwert, wenn bereits gebrauchte Ausrüstung umgebaut werden muss, da dies mit Handschuhen in heißem Zustand erfolgen muss.

Müssen mehrere Leitungen, durchaus bis zu acht Leitungen, an denselben Verteiler angeschlossen werden, sind die Platzverhältnisse oft sehr eng. Die Leitungen müssen dann so nah beieinander verlegt werden, dass die Belüftung mangelhaft ist, der Wärmefluss der einzelnen Leitungen sich gegenseitig behindert und sich Teilbereiche der Leitungen überhitzen können.

Je nach Grundrissfläche und Abgangsrichtung der Leitungen werden durch die abgehenden Leitungen eine oder sogar zwei Begrenzungsflächen vom Grundriss der Abgabeeinheit bzw. des Schmelzgeräts verlassen. Dies bedeutet, dass für den Einbau der Ausrüstung zusätzlicher Platzbedarf besteht und für einen Maschinenbauer, der die Abgabeeinheiten bzw. Schmelzgeräte in die vorgesehenen Produktionsmaschinen integrieren muss, zusätzliche Anforderungen und Schwierigkeiten bestehen.

Aufgabe der Erfindung ist es, eine Abgabeeinheit der eingangs genannten Art so weiterzubilden, dass im Bereich der beiden Seitenflächen des Gehäuses der Abgabeeinheit eine beidseitige Abgangsrichtung von Leitungen, unabhängig von einer Einbaulage der Abgabeeinheit, möglich ist.

Gelöst wird die Aufgabe durch eine Abgabeeinheit, die die Merkmale des Patentanspruchs 1 aufweist.

Bei dieser Abgabeeinheit ist vorgesehen, dass die beiden Seitenflächen in Abstand voneinander angeordnet sind und zwischen diesen die Begrenzungsfläche angeordnet ist, die mit der jeweiligen der beiden Seitenflächen einen stumpfen Winkel einschließt.

Zwischen den beiden Seitenflächen ist somit die Begrenzungsfläche des Verteilers positioniert, im Bereich derer der Verteiler angeordnet ist. Dort ist die Leitung an den Anschluss des Verteilers anschließbar. Hierbei können durchaus, wobei dies als vorteilhaft angesehen wird, mehrere Anschlüsse für Leitungen im Bereich der Begrenzungsfläche angeordnet sein.

Diese Anordnung der Begrenzungsfläche ermöglicht es, die Leitung universell an die Abgabeeinheit, konkret den Verteiler, anzuschließen, dahingehend, dass ein Anschluss zu der einen Seitenfläche oder zur anderen Seitenfläche oder gar, bei mehreren Anschlüssen zu beiden Seitenflächen gleichzeitig möglich ist. Da die Begrenzungsfläche mit der jeweiligen der beiden Seitenflächen einen stumpfen Winkel einschließt, ist zwischen zwei gedachten Ebenen, die mit den beiden Seitenflächen zusammenfallen und der Begrenzungsfläche ein Raum gebildet, der es ermöglicht, die Leitung bzw. die Leitungen an den Verteiler unabhängig von deren Abgangsrichtung(en) anzuschließen.

Es ist somit der Einbau der Abgabeeinheit in eine Maschine oder generell das Aufstellen der Abgabeeinheit flexibel möglich. Die Abgangsrichtung der Leitung bzw. der Leitungen, vorzugsweise bei Ausbildung als Heizschlauch bzw. Heizschläuchen, kann unabhängig von der Einbaulage des Abgabegeräts mehrseitig erfolgen. Insbesondere die heute üblichen Richtungen, nämlich seitlich und nach hinten, sind bei dieser Gestaltung der Abgabeeinheit unkompliziert darstellbar. Bei den hauptsächlichen Abgangsrichtungen der Leitungen von der Abgabeeinheit bzw. von der Schmelzvorrichtung ist darstellbar, dass nur eine Begrenzungsebene vom Grundriss der Abgabeeinheit bzw. der Schmelzvorrichtung durch den Abgang der Leitungen bzw. der Leitungen tangiert wird.

Unter einem im Wesentlichen rechten Winkel, unter dem die beiden Seitenflächen zueinander angeordnet wird, wird ein Winkel von 80 - 100° verstanden. Bevorzugt ist dieser Winkel aber ein rechter Winkel, somit ein 90° Winkel.

Als besonders vorteilhaft wird es angesehen, wenn die Begrenzungsfläche senkrecht zu der Aufstandsebene der Abgabeeinheit auf dem Boden, auf dem die Abgabeeinheit steht, angeordnet ist. Hierdurch ist diese Begrenzungsfläche nicht nur gut zugänglich, zwecks Anschließen der Leitung bzw. der Leitungen, sondern es lässt sich dieses Anschließen bei minimal verwirklichtem Freiraum zwischen den beiden Ebenen, die mit den beiden Seitenflächen zusammenfallen, und der Begrenzungsfläche verwirklichen. Dieser Freiraum stellt sich somit als Volumenkörper mit über seine Höhe identischem Querschnitt dar, der durch eine rechtwinkliges Dreiecksfläche definiert ist. Diese Anordnung der Begrenzungsfläche senkrecht zu der Aufstandsebene ermöglicht es zudem auf einfache Art und Weise, die Leitung bzw. die Leitungen anzuschließen, wobei diese insbesondere horizontal ausgerichtet von der Begrenzungsfläche abgehen.

Vorzugsweise grenzt der Verteiler im Bereich der Begrenzungsfläche an das Gehäuse im Bereich der beiden Seitenflächen. Hierdurch ergibt sich eine vorteilhafte durchgehende Außenstruktur der Abgabeeinheit im Bereich deren Seitenflächen und der Begrenzungsfläche. Die eine Seitenfläche stellt insbesondere eine linke oder eine rechte Seitenfläche bzw. Seitenwand von Abgabeeinheit oder Schmelzvorrichtung dar, während die anderen Seitenfläche eine Rückwand der Abgabeeinheit oder der Schmelzvorrichtung darstellt. Die Begrenzungsfläche des Verteilers stellt die Verbindungsstruktur zwischen der linken bzw. rechten Seitenwand und der Rückwand dar.

Es wird als bevorzugt angesehen, wenn die Begrenzungsfläche unter einem Winkel von 125° bis 145° zu der jeweiligen der beiden Seitenflächen angeordnet ist. Vorzugsweise ist die Begrenzungsfläche unter einem Winkel von 130° bis 140°, insbesondere unter einem Winkel von 135° zu der jeweiligen der beiden Seitenflächen angeordnet. Bei einem Winkel von 135° stellt sich der von den Seitenflächen und der Begrenzungsfläche umschriebene Raum mit einer Grundfläche eines gleichschenkligen Dreiecks dar. Der Vorteil dieser Gestaltung ist darin zu sehen, dass für eine Abgangsrichtung einer Leitung in Richtung der einen Seitenfläche oder in Richtung der anderen Seitenfläche sich dieselben Anschlussverhältnisse für die Leitungen ergeben.

Baulich ist die Abgabeeinheit derart gestaltet, dass das Gehäuse eine vordere Seitenfläche, eine hintere Seitenfläche, eine rechte Seitenfläche und eine linke Seitenfläche aufweist, wobei die hintere Seitenfläche und die rechte Seitenfläche senkrecht zueinander angeordnet sind, die rechte Seitenfläche und die linke Seitenfläche parallel zueinander angeordnet sind und die vordere Seitenfläche und die rechte Seitenfläche senkrecht zueinander angeordnet. Das Gehäuse weist damit einen weitgehend rechteckigen Grundriss auf, abgesehen von der besonderen Eckgestaltung im Bereich einer Ecke des Gehäuses aufgrund der Anordnung der Begrenzungsfläche. Damit kann das Gehäuse weitgehend quaderförmig gestaltet sein, abgesehen von dem im Bereich der einen vertikalen Kante des Gehäuses angeordneten Rücksprungs aufgrund der Positionierung der Begrenzungsfläche.

Insbesondere ist die eine der beiden Seitenflächen die rechte oder die linke Seitenfläche und die andere der beiden Seitenflächen die hintere Seitenfläche.

Unter baulichen Aspekten wird es als besonders vorteilhaft angesehen, wenn der Verteiler als Anbauteil bezüglich der Schmelzvorrichtung ausgebildet ist. Der Verteiler kann damit als eigenständige Funktionskomponente der Abgabeeinheit verbaut werden, insbesondere durch Verbinden mit der Schmelzvorrichtung.

Besonders einfach lässt sich der Anschluss des Verteilers bzw. lassen sich die Anschlüsse des Verteilers verwirklichen, und überdies auch die Leitung bzw. die Leitungen mit dem Anschluss bzw. den Anschlüssen verbinden, wenn eine Längsachse des jeweiligen Anschlusses des Verteilers senkrecht zu der Begrenzungsfläche angeordnet ist. Geschmolzener Klebstoff kann somit in dieser Richtung senkrecht zur Begrenzungsfläche aus dem Verteiler abfließen.

Der Anschluss des Verteilers kann auf unterschiedliche Art und Weise ausgebildet sein. Der Anschluss weist insbesondere eine Bohrung im Verteiler auf. Bei dieser Bohrung handelt es sich insbesondere um eine Gewindebohrung.

Der Anschluss des Verteilers kann auch einen über die Begrenzungsfläche vorstehenden Stutzen aufweisen. Dieser Stutzen dient insbesondere zum Aufschrauben oder Aufstecken der Leitung.

Insbesondere ist vorgesehen, dass der Verteiler im Bereich dessen Begrenzungsfläche mehrere Anschlüsse aufweist, wobei an den jeweiligen Anschluss eine Leitung anschließbar ist.

Gemäß einer bevorzugten Weiterbildung der Abgabeeinheit ist vorgesehen, dass der Verteiler, geneigt zur Begrenzungsfläche, mindestens eine weitere ebene Begrenzungsfläche aufweist, wobei der Verteiler im Bereich der jeweiligen weiteren Begrenzungsfläche ein oder mehrere Anschlüsse aufweist. Der Vorteil dieser Gestaltung ist insbesondere darin zu sehen, dass die Varianten der Anschlüsse der Abgabeeinheit deutlich gesteigert werden können. So können Leitungen im Bereich der einen Begrenzungsfläche oder der weiteren Begrenzungsfläche oder aber im Bereich beider Begrenzungsflächen angeschlossen werden. Entsprechend des günstigsten Zugangs der jeweiligen Leitung zum Anschluss wird ein Anschluss der Begrenzungsflächen ausgewählt.

Gemäß einer bevorzugten Weiterbildung ist vorgesehen, dass die weitere Begrenzungsfläche unter einem spitzen Winkel zur Aufstandsebene der Abgabeeinheit auf dem Boden, vorzugsweise unter einem Winkel von 40° bis 70° zur Aufstandsebene, weiter vorzugsweise unter einem Winkel von 40° bis 50° zur Aufstandsebene, angeordnet ist, insbesondere unter einem Winkel von 45° zur Aufstandsebene angeordnet ist. Während die eine Begrenzungsfläche insbesondere senkrecht zu der Aufstandsebene angeordnet ist, ist die weitere ebene Begrenzungsfläche, geneigt zu einer horizontalen Ebene, in einer nichtvertikalen Ebene angeordnet. Vorzugsweise grenzt die eine Begrenzungsfläche oben an die weitere Begrenzungsfläche, insbesondere entlang einer horizontal verlaufenden Linie. Durch diese Gestaltung ist bei Inanspruchnahme von möglichst geringem Raum eine optimale Zugänglichkeit des Verteilers zwecks Anschließen von mehreren Leitungen im Bereich der Begrenzungsflächen gewährleistet, dies insbesondere unter dem Aspekt des Anschließens der Leitungen in unterschiedlichen Abgangsrichtungen.

Die erfindungsgemäße Abgabeeinheit und deren Weiterbildungen bieten die unterschiedlichsten Vorteile:
So kann für unterschiedliche Abgangsrichtungen von Leitungen bzw. Heizschläuchen die identische Konfiguration der Abgabeeinheit bzw. der Schmelzvorrichtung verwendet werden. Für zwei unterschiedliche Haupt-Abgangsrichtungen der Leitungen verbleiben die Leitungen in einem Bereich der Abgabeeinheit benachbart der Begrenzungsfläche zwischen Begrenzungsebenen zweier äußerer Seitenflächen des Gehäuses. Die Leitungen können ohne Platzmangel komfortabel an den Verteiler angeschlossen werden. Alle Leitungen können mit dem geforderten Abstand zueinander gleich angeschlossen und parallel geführt werden.

Für die häufigsten Abgangsrichtungen der Leitungen werden vorzugsweise gerade oder 45°-Anschlüsse vorgesehen. 90°-Anschlüsse sind nicht erforderlich. Die Anschlüsse an die Leitungen sind vorzugsweise so angeordnet, dass die Zugänglichkeit zum Anschließen der Anschlüsse gegeben ist und die weggeführten Leitungen eine genügend große Separation aufweisen. Hierdurch wird eine Behinderung des Wärmeflusses in den Leitungen bzw. Heizschläuchen vermieden. Der Verteiler und die Anschlüsse können so angeordnet werden, dass die Leitungen bzw. Heizschläuche nicht auf dem Boden liegend verlegt werden müssen.

Werden alle Leitungen in der gleichen Richtung vom Verteiler weggeführt, ist es möglich, die Anordnung derart vorzusehen, dass die Leitungen in beiden Fällen nur durch eine der beiden Begrenzungsebenen der Abgabeeinheit durchgeführt werden. Die andere Begrenzungsebene wird jeweils nicht tangiert. Es können unterschiedliche Abgangsrichtungen der Leitungen kombiniert werden. Somit können von einer unterschiedlichen Anzahl Leitungen maximal der Anzahl der Leitungen entsprechend gleichzeitig unterschiedliche Abgangsrichtungen realisiert werden.

Mit nur einer Konfiguration der Abgabeeinheit und ohne Umbau von Abgabeeinheit oder Verteiler können viele unterschiedliche Abgangsrichtungen der Leitung bzw. Heizschläuche realisiert werden. Die Platzverhältnisse zum Anschließen der Leitungen sind großzügig gestaltet. Hierdurch wird erleichtert, die Leitungen anzuschließen bzw. Befestigungen mit dem korrekten Drehmoment anzuziehen.

Für die meisten und gebräuchlichsten Abgangsrichtungen der Leitungen bzw. der Heizschläuche wird durch die abgehenden Leitungen nur eine Begrenzungsebene vom Grundriss der Abgabeeinheit bzw. der Schmelzvorrichtung verlassen, sofern alle Leitungen in der gleichen Richtung weggeführt werden. Dies bedeutet, dass für unterschiedliche Abgangsrichtungen für den Einbau der Ausrüstung kein zusätzlicher Platzbedarf besteht und für den Maschinenbauer, der die Abgabeeinheit in eine Produktionsmaschine integriert, für die Anordnung der Abgabeeinheit bzw. der Schmelzvorrichtung und die Abgangsrichtung der Leitungen deutlich mehr Flexibilität besteht. Es muss nicht jedes Detail vorgängig bei der Planung der Produktionsmaschine festgelegt werden.

Die Verbindung zwischen Verteiler und Leitung bzw. Schlauch kann auf unterschiedliche Art und Weise erfolgen. Es kann eine Verschraubung zwischen Verteiler und Leitung vorgesehen sein oder aber eine Steckkupplung in Art eines Schnellverschlusses.

Der Verteiler kann die unterschiedlichsten Anordnungen der Anschlüsse aufweisen, insbesondere Anordnung von Bohrungsmustern. Hierdurch kann der Abstand der Leitungen bzw. der Schläuche zueinander optimiert werden. Auch die Anzahl der Anschlüsse für die Leitung bzw. Heizanschlüsse kann unter dem Aspekt der Erfordernisse optimiert werden. Insbesondere werden Steckkupplungen zum Anschließen der Leitungen verwendet. Um das Wegführen der Leitungen bzw. Heizschläuche nach oben oder unten zu erleichtern, können die obersten und untersten Anschlüsse für die Leitungen bzw. Heizschläuche zurückversetzt sein.

Zusätzlich können Steckdosen für Kabel der Heizschläuche angeordnet werden. Weitere Komponenten, wie Filter, Überdruckventile, Druckentlastungsventile, können vorgesehen sein.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand mehrerer bevorzugter Ausführungsbeispiele veranschaulicht, ohne auf diese beschränkt zu sein. Es zeigt:
- Fig. 1: eine Abgabeeinheit zum Ausgeben von geschmolzenem Klebstoff, in einer Draufsicht dargestellt, wobei mit einem Verteiler der Abgabeeinheit mehrere als Heizschläuche ausgebildete Leitungen verbunden sind,
- Fig. 2: die Anordnung gemäß Fig. 1 in einer räumlichen Darstellung,
- Fig. 3: eine Darstellung der Abgabeeinheit gemäß Fig. 1, allerdings mit modifizierter Anordnung der Leitungen,
- Fig. 4: die Anordnung gemäß Fig. 3 in einer räumlichen Darstellung,
- Fig. 5: eine Darstellung der Abgabeeinheit gemäß Fig. 1, allerdings mit modifizierter Anordnung der Leitungen,
- Fig. 6: die Anordnung gemäß Fig. 5 in einer räumlichen Darstellung,
- Fig. 7: in einer Schnittdarstellung Details der Verbindung eines Heizschlauches der in den Fig. 1 bis 6 gezeigten Heizschläuche mit einem Anschluss des Verteilers,
- Fig. 8: betreffend die Verbindung gemäß Fig. 7, in einer räumlichen Ansicht die unmittelbar miteinander verbundenen Teile von Anschluss und Heizschlauch,
- Fig. 9: einen Schnitt durch die Anordnung gemäß Fig. 8, gemäß der Linie IX-IX in Fig. 10,
- Fig. 10: einen Schnitt durch die Anordnung gemäß Fig. 8, gemäß der Linie X-X in Fig. 9,
- Fig. 11: eine alternative Verbindung von Anschluss des Verteilers und Heizschlauch, in einer der Fig. 7 entsprechenden Schnittdarstellung,
- Fig. 12: in schematischer Darstellung eine Anordnung einer Begrenzungsfläche mit Anschlüssen und einer weiteren Begrenzungsfläche mit Anschlüssen bei einem alternativen Ausführungsbeispiel einer Abgabeeinheit.

### Figurenbeschreibung

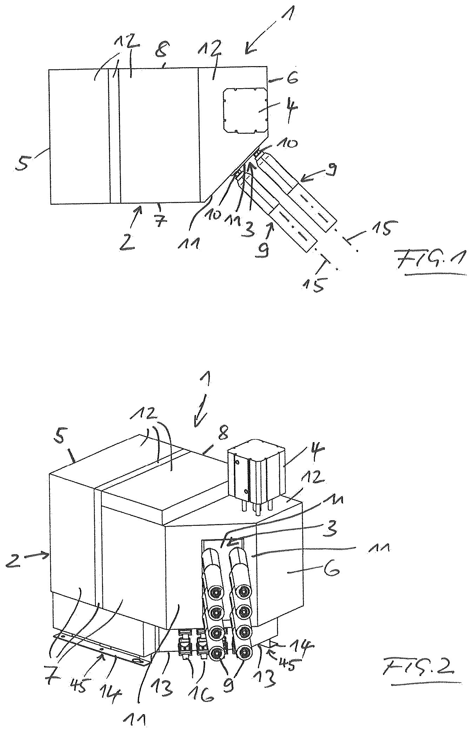

Die Fig. 1 bis 6 zeigen eine Abgabeeinheit 1 zum Ausgeben von Klebstoff. Die Abgabeeinheit 1 weist ein Gehäuse 2, eine innerhalb des Gehäuses 2 angeordnete Schmelzvorrichtung zum Schmelzen des Klebstoffs, einen Verteiler 3 zum Ausgeben von geschmolzenem Klebstoff in mindestens eine an den Verteiler 3 anschließbaren Leitung sowie eine Pumpe 4 zum Fördern des geschmolzenen Klebstoffs durch den Verteiler 3 und von dort durch die Leitung auf.

Das Gehäuse 2 weist, bezogen auf im Bereich einer vorderen Seitenfläche 5 angeordnete Bedienelemente der Abgabeeinheit 1, die vordere Seitenfläche 5, eine hintere Seitenfläche 6, eine rechte Seitenfläche 7 und eine linke Seitenfläche 8 auf. Die Seitenflächen 5 bis 8 sind jeweils senkrecht zu einer Aufstandsebene 45 der Abgabeeinheit 1 auf einem Boden, auf dem die Abgabeeinheit 1 steht, angeordnet. Die hintere Seitenfläche 6 und die rechte Seitenfläche 7 sind senkrecht zueinander angeordnet. Die rechte Seitenfläche 7 und die linke Seitenfläche 8 sind parallel zueinander angeordnet. Die vordere Seitenfläche 5 und die rechte Seitenfläche 7 sind senkrecht zueinander angeordnet.

Der Verteiler 3 weist in einem Bereich, in dem Leitungen 9, vorstehend acht Heizschläuche, an einen der jeweiligen Leitung 9 zugeordneten Anschluss 10 des Verteilers 3 anschließbar sind, eine Begrenzungsfläche 11 auf, die eben ausgebildet ist. Die hintere Seitenfläche 6 und die rechte Seitenfläche 7 sind in Abstand voneinander angeordnet und es ist zwischen diesen die Begrenzungsfläche 11 des Verteilers 3 angeordnet. Diese schließt mit der rechten Seitenfläche 7 einen stumpfen Winkel ein und auch mit der hinteren Seitenfläche 6 einen stumpfen Winkel ein. Der jeweilige stumpfe Winkel beträgt im konkreten Ausführungsbeispiel 135°.

Das Gehäuse 2 weist ferner eine obere Fläche 12 und eine untere Fläche 13 auf. Im Bereich der unteren Fläche 13 sind mit dem Gehäuse 2 parallel und in Abstand zueinander angeordnete Fußleisten 14 positioniert, die im Bereich des Bodens, auf dem die Abgabeeinheit 1 aufsteht, mit dem Boden verbindbar sind.

Die Begrenzungsfläche 11 ist senkrecht zur Aufstandsebene 45 der Abgabeeinheit 1 auf dem Boden angeordnet. Der Verteiler 3 grenzt im Bereich der Begrenzungsfläche 11 an das Gehäuse 2 im Bereich der Seitenflächen 6 und 7 .

Der Verteiler 3 ist als Anbauteil bezüglich der Schmelzvorrichtung ausgebildet und vorzugsweise mit dieser verbunden.

Der jeweilige Anschluss 10 des Verteilers 3 ist derart positioniert, dass eine Längsachse 15 des jeweiligen Anschlusses 10 senkrecht zu der Begrenzungsfläche 11 angeordnet ist.

Konkret sind die veranschaulichten acht Leitungen 9, somit die acht Heizschläuche, horizontal abgehend an den Verteiler 3 angeschlossen, wobei jeweils zwei Leitungen 9 nebeneinander angeordnet sind und jeweils vier Leitungen 9 übereinander angeordnet sind. Die nebeneinander angeordneten Leitungen 9 sind in derselben horizontalen Ebene und die vier übereinander angeordneten Leitungen 9 in derselben vertikalen Ebene angeordnet. Die beiden vertikalen Ebenen verlaufen parallel zueinander, genauso wie die vier horizontalen Ebenen parallel zueinander angeordnet sind.

Unterhalb des Verteilers 3 sind elektrische Anschlüsse 16 angeordnet, die mit Komponenten zum Steuern der Abgabeeinheit 1 verbunden sind.

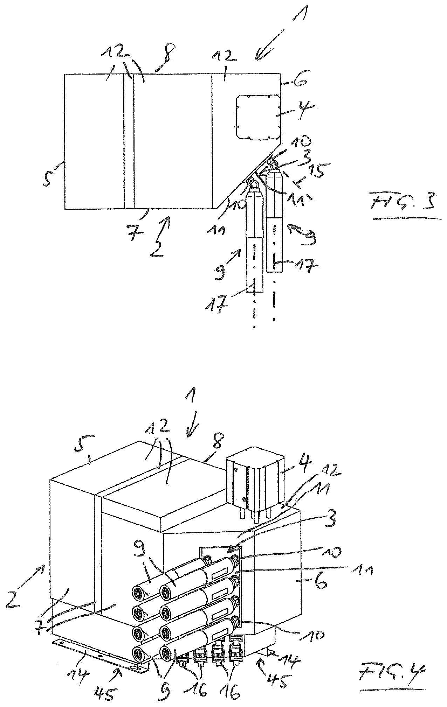

Die insoweit beschriebene Abgabeeinheit 1 ist betreffend die Ausführungsbeispiele gemäß der Fig. 1 bis 6 identisch, sodass bezüglich der Darstellung der Fig. 3 bis 6 auf die vorstehenden Ausführungen verwiesen wird. Die Ausführungsbeispiele gemäß der Fig. 3 bis 6 unterscheiden sich von den Ausführungsbeispielen nach den Fig. 1 und 2 nur durch eine veränderte Abgangsrichtung der Leitungen.

Bei dem Ausführungsbeispiel nach den Fig. 1 und 2 sind die acht Leitungen 9 derart ausgerichtet, dass die Längsachsen 15 der Anschlüsse 10 mit den Längsachsen der Leitungen 9 zusammenfallen.

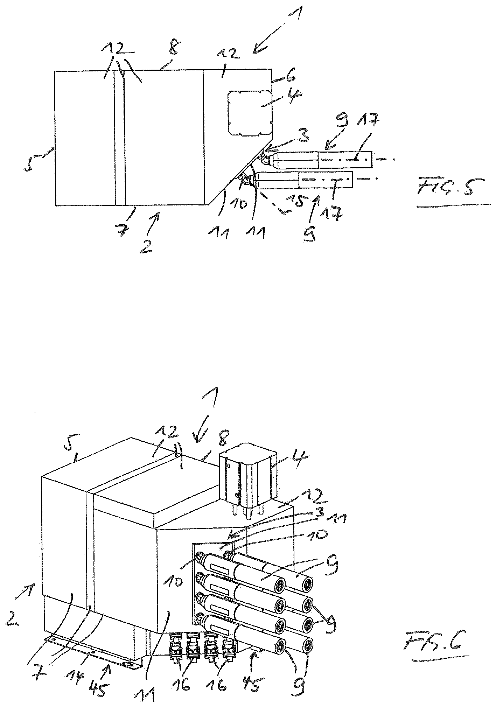

Das Ausführungsbeispiel nach den Fig. 3 und 4 unterscheidet sich von demjenigen nach den Fig. 1 und 2 dadurch, dass die Längsachse 17 der jeweiligen Leitung 9 bezüglich der Längsachse 15 des zugeordneten Anschlusses 10 um einen Winkel von 45° abgewinkelt ist, sowie die Längsachsen 17 parallel zur hinteren Seitenfläche 6 verlaufen. Das Ausführungsbeispiel gemäß der Fig. 5 und 6 unterscheidet sich von demjenigen nach den Fig. 1 und 2 dadurch, dass die Längsachse 17 der jeweiligen Leitung 9 um 45° in entgegengesetzter Richtung zur Längsachse 15 des jeweiligen Anschlusses 10 abgewinkelt angeordnet ist, sodass die Längsachsen 17 parallel zur rechten Seitenfläche 7 angeordnet sind. Die Abwinklung ist jeweils durch eine entsprechend abgewinkelte Gestaltung des jeweiligen Anschlusses bewerkstelligt.

Die Fig. 1 bis 6 veranschaulichen, dass aufgrund des Umstandes, dass die Begrenzungsfläche 11 weder mit der hinteren Seitenfläche 6 noch mit der rechten Seitenfläche 7 bzw. der linken Seitenfläche 8 zusammenfällt, entweder keine Abwinklung der Anschlüsse 10 oder maximale eine Abwinklung der Anschlüsse 10 um 45° notwendig ist, um ein definiertes Abfördern des Klebstoffs mittels der Pumpe 4 durch die Leitungen 9 sicherzustellen. Hierbei wird insbesondere nach den Ausführungsbeispielen gemäß der Fig. 3, 4 bzw. 5, 6 nur eine Begrenzungsebene des Gehäuses 2, somit eine mit einer Seitenfläche zusammenfallende Ebene, für das Abführen der Leitungen in Anspruch genommen, nämlich bei der Ausführungsform nach den Fig. 3 und 4 eine Begrenzungsebene, die eine Ebene mit der rechten Seitenfläche 7 bildet und, betreffend das Ausführungsbeispiel nach den Fig. 5 und 6 eine Begrenzungsebene, die eine Ebene mit der hinteren Seitenfläche 6 bildet. Unabhängig von den jeweiligen Abführrichtungen der Leitungen 9 kann die Abgabeeinheit 1 in der vorgesehenen Aufstellposition verbleiben. Es ist zudem in dem an die Begrenzungsfläche 11 angrenzenden Raum, der durch die Begrenzungsfläche 11 und Begrenzungsebenen der rechten Seitenfläche 7 und der hinteren Seitenfläche 6 umschlossen ist, ausreichend Platz zum Anschließen der diversen, vorliegend acht Leitungen 9 an die zugeordneten Anschlüsse 10 gewährleistet.

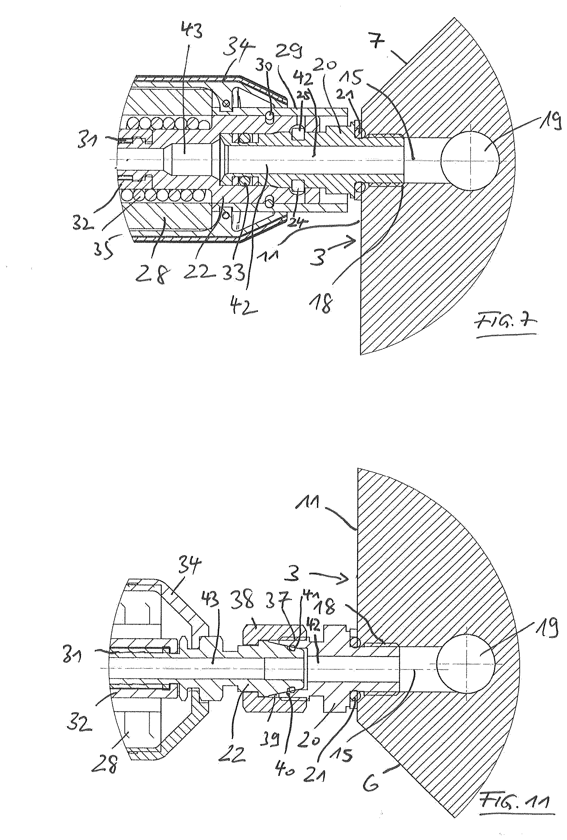

Fig. 7 veranschaulicht in einer Schnittdarstellung die Verbindung einer Leitung 9, die als Heizschlauch ausgebildet ist, über eine gesicherte Steckkuppung mit einem Anschluss 10 des Verteilers 3. Gezeigt ist für diesen Anschlussbereich die Begrenzungsfläche 11 des Verteilers 3, die mit der rechten Seitenfläche 7 des Gehäuses 2 den Winkel von 135° einschließt. Die Begrenzungsfläche 11 weist bei diesem Ausführungsbeispiel benachbart der rechten Seitenfläche 7 eine Gewindebohrung 18 auf, deren Längsachse der Längsachse 15 entspricht und damit senkrecht zur Begrenzungsfläche 11 angeordnet ist. Die Längsachse der Leitung 9 stimmt mit der Längsachse 15 überein, womit in der Fig. 7 der Anschluss gemäß der Variante nach den Fig. 1 und 2 veranschaulicht ist. Die Gewindebohrung 18 steht in Fluidverbindung mit einem Sammelkanal 19 des Verteilers 3. Durch diesen Sammelkanal 19 und die diversen Gewindebohrungen 18 wird der geschmolzene Klebstoff den Leitungen 9 zugeführt.

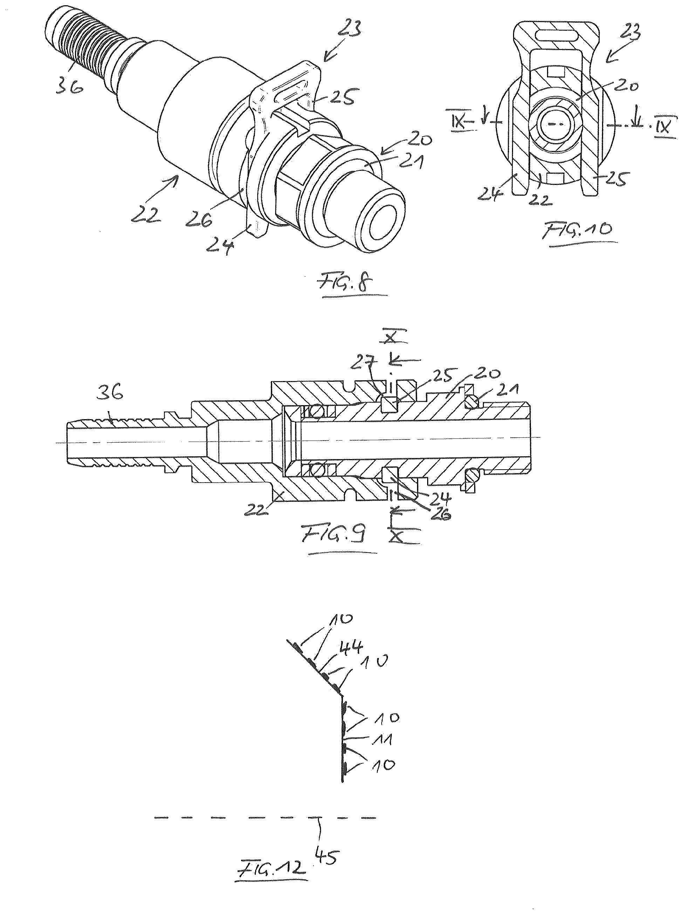

In die Gewindebohrung 18 ist ein Steckanschluss 20 eingeschraubt und es ist über einen Dichtring 21 der Steckanschluss 20 bezüglich des Verteilers 3 abgedichtet. Auf den Steckanschluss 20 ist ein Schlauchadapter 22 der Leitung 9 bzw. des Heizschlauchs in Richtung der Längsachse 15 aufgesteckt und mittels eines U-förmigen Haltekeils 23 in Richtung der Längsachse 15 fixiert. Der Haltekeil 23 greift mit Schenkeln 24, 25 in schlitzförmige Ausnehmungen 26, 27 des Schlauchadapters 22 ein. Insofern wird ergänzend auf die Darstellung der Fig. 8 bis 10 verwiesen, die die Verbindung von Steckanschluss 20 und Schlauchadapter 22 sowie die Sicherung über den Haltekeil 23 im Detail veranschaulichen.

Der Steckanschluss 20 weist einen Durchgang 42 und der Schlauchadapter 22 einen Durchgang 43 auf, die jeweils rotationssymmetrisch bezüglich der Längsachse 15 angeordnet sind.

Betreffend die Anordnung, die in den Fig. 7 bis 10 dargestellt ist, sind zusätzlich eine Isolation 28 des Heizschlauchs, eine den Schlauchadapter 22 radial umschließende Isolierhülse 29, die über einen Sicherungsring 30 axial bezüglich des Schlauchadapters 22 festgelegt ist, veranschaulicht. Auf den Schlauchadapter 22 ist im Bereich dessen Endes 36 ein Hochdruckschlauch 31 aufgeschoben und dort mittels einer Presshülse 32 mit dem Schlauchadapter 22 verbunden. Im Bereich des dem Verteiler 3 abgewandten Endes des Steckanschlusses 20 nimmt dieser ein Dichtungsring 33 zum Abdichten von Steckanschluss 20 und Schlauchadapter 22 in diesem Bereich auf. Eine Schale 34 umschließt radial die Isolierhülse 29 und die Isolation 28. Mit der Bezugsziffer 35 ist ein aufgewickelter Heizleiter des Heizschlauchs bezeichnet. Die Leitung 9 bzw. der Heizschlauch wird im Bereich der Schale 34 ergriffen und der Schlauchadapter 22 auf den Steckanschluss 20 gesteckt, in eine Dichtposition, in der der Haltekeil 23 eingesteckt werden kann, sodass der Schlauchadapter 22 axial bezüglich des Steckanschlusses 20 festgelegt ist.

Fig. 11 zeigt im Unterschied zu dem Steckanschluss gemäß der Fig. 7 bis 10 einen Schraubanschluss der jeweiligen Leitung 9 bzw. des jeweiligen Heizschlauchs. Gemäß dem Ausführungsbeispiel nach Fig. 11 ist ein modifizierter Steckanschluss 20 in die Gewindebohrung 18 eingeschraubt und über den Dichtungsring 21 abgedichtet. Das der Gewindebohrung 18 abgewandte Ende des Steckanschlusses 20 ist mit einem Außengewinde 37 versehen. Ein modifizierter Schlauchadapter 22 nimmt eine Mutter 38 auf, die auf in den Steckanschluss 20 im Bereich des Außengewindes 37 aufschraubbar ist. Beim Aufschrauben wird der Schlauchadapter mit einer konischen Kontaktfläche 39 gegen eine konische Kontaktfläche 40 des Steckanschlusses 20 bewegt. Zwischen den beiden Kontaktflächen 39, 40 ist ein Dichtungsring 41 angeordnet.

Bei den Ausführungsbeispielen gemäß der Figuren 3 bis 6 sind die zu den Fig. 7 bis 11 beschriebenen Steckanschlüsse 20 länger ausgebildet und in deren Längsrichtung um 45° abgewinkelt, sodass der in die Gewindebohrung 18 eingeschraubte Abschnitt des Steckanschlusses 20 die Längsachse 15 aufweist und der mit dem Schlauchadapter 22 verbundene Abschnitt des Steckanschlusses 20 die Längsachse 17 aufweist.

Fig. 12 zeigt in einer schematischen Darstellung eine Modifizierung der Abgabeeinheit 1 dahingehend, dass diese nicht nur die ebene Begrenzungsfläche 11 aufweist, sondern eine oben an die Begrenzungsfläche 11 angrenzende weitere ebene Begrenzungsfläche 44 besitzt. Die Begrenzungsfläche 11 ist senkrecht zur Aufstandebene 45 angeordnet und es schließt die weitere Begrenzungsfläche 44 einen Winkel von 135° mit der Begrenzungsfläche 11 ein, ist somit unter einem Winkel von 45° zur Aufstandsebene 45 angeordnet. Die weitere Begrenzungsfläche 44 ist nach vorne gerichtet angeordnet, somit in Richtung der vorderen Seitenfläche 5. Für beide Begrenzungsflächen 11 und 44 sind Anschlüsse 10 veranschaulicht, wobei die Anschlüsse 10 der jeweiligen Begrenzungsfläche 11 bzw. 44 entsprechend den Anschlüssen 10 der Ausführungsbeispiele gemäß der Figuren 1-6 angeordnet sein können.

### Bezugszeichenliste

- 1: Abgabeeinheit
- 2: Gehäuse
- 3: Verteiler
- 4: Pumpe
- 5: vordere Seitenfläche
- 6: hintere Seitenfläche
- 7: rechte Seitenfläche
- 8: linke Seitenfläche
- 9: Leitung
- 10: Anschluss
- 11: Begrenzungsfläche
- 12: obere Fläche
- 13: untere Fläche
- 14: Fußleiste
- 15: Längsachse
- 16: Anschluss
- 17: Längsachse
- 18: Gewindebohrung
- 19: Sammelkanal
- 20: Steckanschluss
- 21: Dichtungsring
- 22: Schlauchadapter
- 23: Haltekeil
- 24: Schenkel
- 25: Schenkel
- 26: Ausnehmung
- 27: Ausnehmung
- 28: Isolation
- 29: Isolierhülse
- 30: Sicherungsring
- 31: Hochdruckschlauch
- 32: Presshülse
- 33: Dichtungsring
- 34: Schale
- 35: Heizleiter
- 36: Ende
- 37: Außengewinde
- 38: Mutter
- 39: Kontaktfläche
- 40: Kontaktfläche
- 41: Dichtungsring
- 42: Durchgang
- 43: Durchgang
- 44: weitere Begrenzungsfläche
- 45: Aufstandsebene

## Patentansprüche

1. Abgabeeinheit (1) zum Ausgeben von Klebstoff, mit einem Gehäuse (2), einer innerhalb des Gehäuses (2) angeordneten Schmelzvorrichtung zum Schmelzen des Klebstoffs, einem Verteiler (3) zum Ausgeben von geschmolzenem Klebstoff in mindestens eine an den Verteiler (3) anschließbare Leitung (9) sowie einer Pumpe (4) zum Fördern des geschmolzenen Klebstoffs durch den Verteiler (3), wobei das Gehäuse (2) mehrere äußere Seitenflächen (5, 6, 7, 8) aufweist, wobei das Gehäuse (2) eine vordere Seitenfläche (5), eine hintere Seitenfläche (6), eine rechte Seitenfläche (7) und eine linke Seitenfläche (8) aufweist, wobei die hintere Seitenfläche (6) und die rechte Seitenfläche (7) senkrecht zueinander angeordnet sind, die rechte Seitenfläche (7) und die linke Seitenfläche (8) parallel zueinander angeordnet sind und die vordere Seitenfläche (5) und die rechte Seitenfläche (7) senkrecht zueinander angeordnet sind, wobei zwei der Seitenflächen (6, 7) eben ausgebildet sind, sowie diese beiden Seitenflächen (6, 7) senkrecht zu einer Aufstandsebene (45) der Abgabeeinheit (1) auf einem Boden und wobei die beiden Seitenflächen (6, 7) unter einem rechten Winkel zueinander angeordnet sind, wobei der Verteiler (3) in einem Bereich, in dem die Leitung (9) an einen Anschluss (10) des Verteilers (3) anschließbar ist, eine Begrenzungsfläche (11) aufweist, die eben ausgebildet ist, **dadurch gekennzeichnet, dass** die beiden Seitenflächen (6, 7) in Abstand voneinander angeordnet sind und zwischen diesen die Begrenzungsfläche (11) angeordnet ist, die mit der jeweiligen der beiden Seitenflächen (6, 7) einen stumpfen Winkel einschließt.

2. Abgabeeinheit nach Anspruch 1, **dadurch gekennzeichnet, dass** die beiden Seitenflächen (6, 7) unter einem Winkel von 90° zueinander angeordnet sind.

3. Abgabeeinheit nach Anspruch 1 oder 2, **dadurch gekennzeichnet, dass** die Begrenzungsfläche (11) senkrecht zu der Aufstandsebene (45) angeordnet ist.

4. Abgabeeinheit nach einem der Ansprüche 1 bis 3, **dadurch gekennzeichnet, dass** der Verteiler (3) im Bereich der Begrenzungsfläche (11) an das Gehäuse (2) im Bereich der beiden Seitenflächen (6, 7) angrenzt.

5. Abgabeeinheit nach einem der Ansprüche 1 bis 4, **dadurch gekennzeichnet, dass** die Begrenzungsfläche (11) unter einem Winkel von 125° bis 145° zu der jeweiligen der beiden Seitenflächen (6, 7) angeordnet ist.

6. Abgabeeinheit nach einem der Ansprüche 1 bis 4, **dadurch gekennzeichnet, dass** die Begrenzungsfläche (11) unter einem Winkel von 135° zu der jeweiligen der beiden Seitenflächen (6, 7) angeordnet ist.

7. Abgabeeinheit nach einem der Ansprüche 1 bis 6, **dadurch gekennzeichnet, dass** die eine der beiden Seitenflächen die rechte Seitenfläche (7) oder die linke Seitenfläche (8) und die andere der beiden Seitenflächen die hintere Seitenfläche (6) ist.

8. Abgabeeinheit nach einem der Ansprüche 1 bis 7, **dadurch gekennzeichnet, dass** eine Längsachse (15) des Anschlusses (10) des Verteilers (3) senkrecht zu der Begrenzungsfläche (11) angeordnet ist.

9. Abgabeeinheit nach einem der Ansprüche 1 bis 8, **dadurch gekennzeichnet, dass** der Anschluss (10) des Verteilers (3) eine Bohrung im Verteiler (3), insbesondere eine Gewindebohrung (18) im Verteiler aufweist.

10. Abgabeeinheit nach einem der Ansprüche 1 bis 9, **dadurch gekennzeichnet, dass** der Anschluss (10) des Verteilers (3) einen über die Begrenzungsfläche (11) vorstehenden Steckanschluss (20), insbesondere zum Aufschrauben oder gesicherten Aufstecken der Leitung (9) aufweist.

11. Abgabeeinheit nach Anspruch 10, **dadurch gekennzeichnet, dass** ein der Begrenzungsfläche (11) abgewandter Stutzenbereich des Steckanschlusses (20) eine Längsachse (17) aufweist, die senkrecht zur Begrenzungsfläche (11) angeordnet ist oder unter einem Winkel von 40° bis 60°, insbesondere unter einem Winkel von 45° zur Begrenzungsfläche (11) angeordnet ist.

12. Abgabeeinheit nach einem der Ansprüche 1 bis 11, **dadurch gekennzeichnet, dass** mehrere über die Begrenzungsfläche (11) vorstehende Steckanschlüsse (20) vorgesehen sind, die bei identischer Winkelanordnung bezüglich der Begrenzungsfläche (11) identisch ausgerichtet sind.

13. Abgabeeinheit nach einem der Ansprüche 1 bis 12, **dadurch gekennzeichnet, dass** der Verteiler (3) im Bereich dessen Begrenzungsfläche (11) mehrere Anschlüsse (10) aufweist, wobei an den jeweiligen Anschluss (10) eine Leitung (9) anschließbar ist.

14. Abgabeeinheit nach einem der Ansprüche 1 bis 13, **dadurch gekennzeichnet, dass** der Verteiler, geneigt zur Begrenzungsfläche (11) mindestens eine weitere ebene Begrenzungsfläche (44) aufweist, wobei der Verteiler (3) im Bereich der jeweiligen weiteren Begrenzungsfläche (44) ein oder mehrere Anschlüsse (10) aufweist, insbesondere die Begrenzungsflächen (11, 44) aneinander angrenzen.

15. Abgabeeinheit nach Anspruch 14, **dadurch gekennzeichnet, dass** die weitere Begrenzungsfläche (44) unter einem spitzen Winkel zur Aufstandsebene (45), vorzugsweise einem Winkel von 40° bis 70° zur Aufstandsebene (45) angeordnet ist, weiter vorzugsweise unter einem Winkel von 40° bis 50° zur Aufstandsebene (45) angeordnet ist, insbesondere unter einem Winkel von 45° zur Aufstandsebene (45) angeordnet ist.

## Claims

1. Delivery unit (1) for dispensing adhesive, comprising a housing (2), a melting apparatus, arranged within the housing (2), for melting the adhesive, a distributing device (3) for dispensing molten adhesive in at least one line (9) connectable to the distributing device (3), and a pump (4) for conveying the molten adhesive through the distributing device (3), wherein the housing (2) has a plurality of outer side faces (5, 6, 7, 8), wherein the housing (2) has a front side face (5), a rear side face (6), a right side face (7) and a left side face (8), wherein the rear side face (6) and the right side face (7) are arranged perpendicular to each other, the right side face (7) and the left side face (8) are arranged parallel to each other and the front side face (5) and the right side face (7) are arranged perpendicular to each other, wherein two of the side faces (6, 7) are of flat configuration, and these two side faces (6, 7) are arranged perpendicular to a support plane (45) of the delivery unit (1) on a base and wherein the two side faces (6, 7) are arranged at a right angle to each other, wherein the distributing device (3), in a region in which the line (9) is connectable to a connector (10) of the distributing device (3), has a boundary surface (11) of flat configuration, **characterized in that** the two side faces (6, 7) are arranged at a distance apart and between these is arranged the boundary surface (11), which forms an obtuse angle with the respective one of the two side faces (6, 7).

2. Delivery unit according to Claim 1, **characterized in that** the two side faces (6, 7) are arranged at an angle of 90° to each other.

3. Delivery unit according to Claim 1 or 2, **characterized in that** the boundary surface (11) is arranged perpendicular to the support plane (45).

4. Delivery unit according to any of Claims 1 to 3, **characterized in that** the distributing device (3), in the region of the boundary surface (11), borders the housing (2) in the region of the two side faces (6, 7).

5. Delivery unit according to any of Claims 1 to 4, **characterized in that** the boundary surface (11) is arranged at an angle of 125° to 145° to the respective one of the two side faces (6, 7).

6. Delivery unit according to any of Claims 1 to 4, **characterized in that** the boundary surface (11) is arranged at an angle of 135° to the respective one of the two side faces (6, 7).

7. Delivery unit according to any of Claims 1 to 6, **characterized in that** one of the two side faces is the right side face (7) or the left side face (8), and the other of the two side faces is the rear side face (6).

8. Delivery unit according to any of Claims 1 to 7, **characterized in that** a longitudinal axis (15) of the connector (10) of the distributing device (3) is arranged perpendicular to the boundary surface (11).

9. Delivery unit according to any of Claims 1 to 8, **characterized in that** the connector (10) of the distributing device (3) comprises a borehole in the distributing device (3), in particular a threaded hole (18) in the distributing device.

10. Delivery unit according to any of Claims 1 to 9, **characterized in that** the connector (10) of the distributing device (3) comprises a plug-in connector (20) protruding over the boundary surface (11), in particular for the screwing-on, or secured mounting, of the line (9).

11. Delivery unit according to Claim 10, **characterized in that** that a socket region, facing away from the boundary surface (11), of the plug-in connector (20), has a longitudinal axis (17), which is arranged perpendicular to the boundary surface (11) or is arranged at an angle of 40° to 60°, in particular at an angle of 45°, to the boundary surface (11).

12. Delivery unit according to any of Claims 1 to 11, **characterized in that** a plurality of plug-in connectors (20) are provided, which protrude over the boundary surface (11) and which, given identical angular arrangement with respect to the boundary surface (11), are identically oriented.

13. Delivery unit according to any of Claims 1 to 12, **characterized in that** the distributing device (3), in the region of its boundary surface (11), has a plurality of connectors (10), wherein to the respective connector (10) a line (9) is connectable.

14. Delivery unit according to any of Claims 1 to 13, **characterized in that** the distributing device has, at an angle to the boundary surface (11), at least one further flat boundary surface (44), wherein the distributing device (3) has in the region of the respective further boundary surface (44) one or more connectors (10), in particular the boundary surfaces (11, 44) border one another.

15. Delivery unit according to Claim 14, **characterized in that** the further boundary surface (44) is arranged at an acute angle to the support plane (45), preferably an angle of 40° to 70° to the support plane (45), further preferably at an angle of 40° to 50° to the support plane (45), in particular at an angle of 45° to the support plane (45).

## Revendications

1. Unité de distribution (1) pour le déchargement d'adhésif, avec un boîtier (2), un dispositif de fusion agencé à l'intérieur du boîtier (2) pour faire fondre l'adhésif, un répartiteur (3) pour décharger l'adhésif fondu dans au moins une conduite (9) pouvant être raccordée au répartiteur (3), et une pompe (4) pour transporter l'adhésif fondu à travers le répartiteur (3), le boîtier (2) présentant plusieurs surfaces latérales extérieures (5, 6, 7, 8), le boîtier (2) présentant une surface latérale avant (5), une surface latérale arrière (6), une surface latérale droite (7) et une surface latérale gauche (8), la surface latérale arrière (6) et la surface latérale droite (7) étant agencées perpendiculairement l'une à l'autre, la surface latérale droite (7) et la surface latérale gauche (8) étant agencées parallèlement l'une à l'autre et la surface latérale avant (5) et la surface latérale droite (7) étant agencées perpendiculairement l'une à l'autre, deux des surfaces latérales (6, 7) étant réalisées planes, et ces deux surfaces latérales (6, 7) étant perpendiculaires à un plan d'appui (45) de l'unité de distribution (1) sur un sol et les deux surfaces latérales (6, 7) étant agencées selon un angle droit l'une par rapport à l'autre, le répartiteur (3) présentant, dans une zone dans laquelle la conduite (9) peut être raccordée à un raccord (10) du répartiteur (3), une surface de délimitation (11) qui est réalisée plane, **caractérisée en ce que** les deux surfaces latérales (6, 7) sont agencées à distance l'une de l'autre et qu'entre celles-ci est agencée la surface de délimitation (11) qui forme un angle obtus avec la surface respective des deux surfaces latérales (6, 7).

2. Unité de distribution selon la revendication 1, **caractérisée en ce que** les deux surfaces latérales (6, 7) sont agencées selon un angle de 90° l'une par rapport à l'autre.

3. Unité de distribution selon la revendication 1 ou 2, **caractérisée en ce que** la surface de délimitation (11) est agencée perpendiculairement au plan d'appui (45).

4. Unité de distribution selon l'une quelconque des revendications 1 à 3, **caractérisée en ce que** le répartiteur (3) est adjacent au boîtier (2) dans la zone de la surface de délimitation (11), dans la zone des deux surfaces latérales (6, 7).

5. Unité de distribution selon l'une quelconque des revendications 1 à 4, **caractérisée en ce que** la surface de délimitation (11) est agencée selon un angle de 125° à 145° par rapport à la surface respective des deux surfaces latérales (6, 7).

6. Unité de distribution selon l'une quelconque des revendications 1 à 4, **caractérisée en ce que** la surface de délimitation (11) est agencée selon un angle de 135° par rapport à la surface respective des deux surfaces latérales (6, 7).

7. Unité de distribution selon l'une quelconque des revendications 1 à 6, **caractérisée en ce que** l'une des deux surfaces latérales est la surface latérale droite (7) ou la surface latérale gauche (8) et l'autre des deux surfaces latérales est la surface latérale arrière (6).

8. Unité de distribution selon l'une quelconque des revendications 1 à 7, **caractérisée en ce qu'**un axe longitudinal (15) du raccord (10) du répartiteur (3) est agencé perpendiculairement à la surface de délimitation (11).

9. Unité de distribution selon l'une quelconque des revendications 1 à 8, **caractérisée en ce que** le raccord (10) du répartiteur (3) présente un alésage dans le répartiteur (3), notamment un alésage fileté (18) dans le répartiteur.

10. Unité de distribution selon l'une quelconque des revendications 1 à 9, **caractérisée en ce que** le raccord (10) du répartiteur (3) présente un raccord enfichable (20) en saillie sur la surface de délimitation (11), notamment pour le vissage ou l'enfichage sécurisé de la conduite (9).

11. Unité de distribution selon la revendication 10, **caractérisée en ce qu'**une zone de tubulure du raccord enfichable (20) détournée de la surface de délimitation (11) présente un axe longitudinal (17) qui est agencé perpendiculairement à la surface de délimitation (11) ou qui est agencé selon un angle de 40° à 60°, notamment selon un angle de 45° par rapport à la surface de délimitation (11).

12. Unité de distribution selon l'une quelconque des revendications 1 à 11, **caractérisée en ce qu'**il est prévu plusieurs raccords enfichables (20) en saillie au-dessus de la surface de délimitation (11), qui sont orientés de manière identique pour un agencement angulaire identique par rapport à la surface de délimitation (11).

13. Unité de distribution selon l'une quelconque des revendications 1 à 12, **caractérisée en ce que** le répartiteur (3) présente plusieurs raccords (10) dans la zone de sa surface de délimitation (11), une conduite (9) pouvant être raccordée au raccord (10) respectif.

14. Unité de distribution selon l'une quelconque des revendications 1 à 13, **caractérisée en ce que** le répartiteur présente, inclinée par rapport à la surface de délimitation (11), au moins une autre surface de délimitation plane (44), le répartiteur (3) présentant, dans la zone de l'autre surface de délimitation respective (44), un ou plusieurs raccords (10), les surfaces de délimitation (11, 44) étant notamment adjacentes.

15. Unité de distribution selon la revendication 14, **caractérisée en ce que** l'autre surface de délimitation (44) est agencée selon un angle aigu par rapport au plan d'appui (45), de préférence selon un angle de 40° à 70° par rapport au plan d'appui (45), de préférence encore selon un angle de 40° à 50° par rapport au plan d'appui (45), notamment selon un angle de 45° par rapport au plan d'appui (45).
